# EUROPÄISCHE PATENTSCHRIFT

(11) **EP 0 553 319 B1**
(45) Veröffentlichungstag und Bekanntmachung des Hinweises auf die Patenterteilung: **06.03.1996**
(21) Anmeldenummer: 92916022.4
(22) Anmeldetag: 04.07.1992
(51) Int. Cl.: B03B 9/06, B03B 5/28, B29B 17/02, B03C 7/00, B03C 7/12

(54) **VERFAHREN ZUR TRENNUNG EINES KUNSTSTOFFGEMENGES AUS MINDESTENS DREI KOMPONENTEN UNTER ANWENDUNG DER ELEKTROSTATIK**
METHOD OF SEPARATING A MIXTURE OF PLASTICS COMPRISING AT LEAST THREE COMPONENTS USING ELECTROSTATIC TECHNIQUES
PROCEDE FAISANT APPEL AUX TECHNIQUES ELECTROSTATIQUES POUR LA SEPARATION D'UN MELANGE DE MATIERES PLASTIQUES COMPORTANT AU MOINS TROIS COMPOSANTS

(30) Priorität: 21.08.1991 DE 4127572
(43) Veröffentlichungstag der Anmeldung: 04.08.1993
(73) Patentinhaber: KALI UND SALZ AKTIENGESELLSCHAFT, D-34111 Kassel (DE)
(72) Erfinder: STAHL, Ingo, D-3502 Vellmar (DE); HOLLSTEIN, Axel, D-3500 Kassel (DE); KLEINE-KLEFFMANN, Ulrich, D-6430 Bad Hersfeld (DE); GEISLER, Iring, D-6430 Bad Hersfeld (DE); NEITZEL, Ulrich, D-3500 Kassel (DE)
(86) Internationale Anmeldenummer: EP9201613
(87) Internationale Veröffentlichungsnummer: WO9303848

(56) Entgegenhaltungen:
- EP-A- 0 279 200
- DE-C- 940 341
- GB-A- 2 078 138
- US-A- 4 199 109
- US-A- 4 728 045
- PATENT ABSTRACTS OF JAPAN vol. 8, no. 138 (C-231)(1575) 27. Juni 1984

## Beschreibung

Die Erfindung betrifft ein Verfahren zur Trennung von Kunststoffteilchen eines Kunststoffgemenges von Kunststoffen chemisch unterschiedlicher Art, die teilweise einen sich überschneidenden und teilweise einen unterschiedlichen Dichtebereich aufweisen, z.B. Polyethylen (PE), Polyethylenterephthalat (PET), Polypropylen (PP), Polystyrol (PS) und Polyvinylchlorid (PVC). Derart unterschiedliche Kunststoffarten entstehen als Abfall beispielsweise bei der Vermengung unterschiedlicher Einwegflaschen. So werden stille Wasser vorwiegend in 1,5-Liter PVC-Flaschen abgefüllt, während andere Getränke in sogenannten PET-Flaschen verkauft werden. So werden allein in Westeuropa 1,4 Milliarden PET-Flaschen pro Jahr produziert. Die Flaschen weisen in der Regel einen Polyethylenschraubdeckel auf, wobei die PET-Flaschen ein Bodenteil aus ebenfalls Polyethylen besitzen können. Eine direkte Wiederverwertung der vermischten Flaschenkunststoffe ist nicht möglich da PET erst bei 260°C schmilzt, während PVC sich bereits oberhalb der Erweichungstemperatur von 160°C unter HCl-Abspaltung zersetzt. Für solche vermischten Kunststoffe gibt es daher keine nennenswerter Wiederverwertungsmöglichkeiten, so daß die Abfallkunststoffe bislang nicht gesammelt, sondern über den Hausmüll entsorgt werden, d.h., letztlich verbrannt oder deponiert werden.

Für vermischte PVC-haltige Kunststoffe lassen sich in der Regel auch keine Erlöse erzielen. Vielmehr verlangt der Verwerter häufig noch eine Gutschrift, die sich an den eingesparten Deponiekosten orientiert.

Demgegenüber gibt es für sortenreine Recyclingkunststoffe seit langem einen Markt, wobei sich die Preise an den Preisen für Neuware orientieren. Je nach Qualität wird für Recyclingware bis zu 60 % der Neuware erzielt. Es besteht also ein großes Interesse an Verfahren zur Trennung von vermischten Kunststoffen.

Die aus dem Stand der Technik bekannten Verfahren zur Trennung von Kunststoffteilchen von Kunststoffen chemisch unterschiedlicher Art arbeiten mit nach der Dichte trennenden Anlagen , z.B. Hydrozyklonen. Dieses Verfahren versagt allerdings bei Kunststoffen, die im gleichen Dichtebereich liegen, wie z.B. PET (Dichte ca. g/cm³ 1,37 - 1,38) und PVC (Dichte ca. g/cm³ 1,38). Hingegen ist die Trennung von Polyethylen (PE) von den anderen beiden Kunststoffarten PET und PVC aufgrund der unterschiedlichen Dichte von 0,95 g/cm³ möglich. Die Trennung von Kunststoffen, die im gleichen Dichtebereich liegen, kann beispielsweise auf elektrostatischem Wege erfolgen.

Nach US 4199109 ist ein Verfahren zur Rückgewinnung verschiedener Plastkomponenten aus mehrschichtigen Artikeln bekannt bei dem das Material zunächst erhitzt und anschließend so zerkleinert wird, daß die verschiedenen Plastkomponenten weitgehend aufgeschlossen als fein zerteiltes Gut vorliegen. Das zerkleinerte Gut wird nach Abkühlung jeweils in zwei Stoffgruppen getrennt. Je nach Trennmerkmal wird entweder eine Dichtetrennung oder eine Trennung nach Korngröße und Kornform in Luftstrom oder eine Trennung nach den elektrischen Eigenschaften durchgeführt. Mit diesem Verfahren können nicht mehr als zwei Kunststoffkomponenten je nach vorliegendem unterschiedlichen Trennmerkmal voneinander getrennt werden. Eine Trennung von drei oder mehr frei vorliegenden Komponenten, die einen gleichen oder annähernd gleichen Dichtebereich aufweisen, ist auf die genannte Weise nicht möglich.

Aus der DE-PS 30 35 649 ist bekannt, Kunststoffe elektrostatisch in einem Freifallscheider zu trennen.

Es hat sich jedoch herausgestellt, daß bei der Trennung eines Kunststoffgemenges mit drei oder vier unterschiedlichen Arten von Kunststoffen, also beispielsweise PE, PET, PS und PVC, mit einem dieser bekannten Verfahren eine große Menge an Mittelgut an fällt bzw. die Abscheidungen an der jeweiligen Elektrode nur einen ungenügenden Reinheitsgrad aufweisen;
darüber hinaus weist das Mittelgut einen hohen Bestandteil aus mindestens einem der Einsatz-Kunststoffe auf.

Der Erfindung liegt daher die Aufgabe zugrunde, ein Verfahren der eingangs genannten Art zu schaffen, bei dem mehrere Komponenten eines Kunststoffgemenges auch ähnlicher bzw. gleicher Dichten, sicher voneinander getrennt werden können. Die Aufgabe wird dadurch gelöst, daß die Trennung in mindestens zwei Schritten erfolgt, wobei in einem ersten Schritt die Kunststoffteilchen voneinander getrennt werden, die einen unterschiedlichen Dichtebereich aufweisen, und wobei in einem zweiten Schritt die Kunststoffteilchen mit gleichem Dichtebereich getrennt werden. Hierbei werden vorteilhaft im ersten Schritt die Kunststoffteilchen nach dem Prinzip der Dichtetrennung getrennt, wobei die Dichte der Trennflüssigkeit so gewählt wird, daß sie in das Gebiet der größten Dichtedifferenz zwischen den einzelnen Kunststoffarten des Kunststoffgemenges fällt; vorteilhaft wird hierbei die Dichte der Trennflüssigkeit zwischen 1,0 und 1,3 g/cm³ eingestellt. Die Dichtetrennung kann hierbei auch mittels Hydrozyklon erfolgen. Gegebenenfalls erfolgt die Trennung nach der Dichte nicht nur in einem Schritt, sondern in mehreren, wenn mehrere Kunststoffarten unterschiedlicher Dichte getrennt werden sollen.

Es hat sich ferner gezeigt, daß durch eine Oberflächenbehandlung der Kunststoffteilchen des Kunststoffgemenges eine verbesserte triboelektrische Aufladung im Sinne einer höheren Ladungsdichte erreicht werden kann.

Die chemische Behandlung der Oberfläche der Kunststoffteilchen des Kunststoffgemenges erfolgt nach einem vorteilhaften Merkmal der Erfindung dadurch, daß die Trennflüssigkeit so gewählt wird, daß sie im basischen Bereich (pH-Wert etwa 10-12) oder im sauren Bereich (pH-Wert von 2-4) liegt. Besonders vorteilhafte Ergebnisse ergeben sich dann, wenn die Trennflüssigkeit eine Salzlösung ist, deren Hauptbestandteil NaCl ist. Zusätzlich zu dem NaCl in der Salzlösung können noch K-, Mg- und SO₄-Ionen in der Salzlösung vorhanden sein, d.h., aufgrund der gewünschten Zusammensetzung der Salzlösung bietet sich die Verwendung einer Salzlösung an, wie sie bei der Herstellung von Kali im Kalibergbau als Abfallprodukt entsteht. Eine verbesserte triboelektrische Aufladung wird insbesondere auch dadurch erreicht, daß nach der Dichtetrennung die Trennflüssigkeit aus dem Kunststoffgemenge durch Wasser herausgewaschen wird. Im Zuge der Dichtetrennung bzw. der nachfolgenden Reinigung des Kunststoffgemenges mit Wasser kann eine Reinigung der Kunststoffteilchen, die eine Größe unter 10, und vorzugsweise etwa unter 6 mm, aufweisen, von Papierresten bzw. Getränkeresten erfolgen. Eine entsprechende Reinigung ist allerdings auch durch einen der Dichtetrennung vorgelagerten Waschvorgang in beispielsweise einer Waschmühle oder einem Turbowäscher möglich. Nach dem Waschen erfolgt eine Trocknung des Kunststoffgemenges, wobei vor dem eigentlichen Trocknen der Wassergehalt des Kunststoffgemenges durch ein Entwässerungsaggregat, z.B. eine Zentrifuge, auf einen Restwasseranteil von unter 2 % reduziert wird.

Im Nachfolgenden wird das Kunststoffgemenge einer Wärmebehandlung bei 30 - 100°C über einen Zeitraum von mindestens 5 min unterzogen; auch diese Maßnahme dient der Erzielung einer höheren Ladungsdichte der einzelnen Kunststoffteilchen. Erklärbar erscheint dies dadurch, daß aufgrund der Wärmebehandlung in dem oben angegebenen Temperaturbereich eine Veränderung der Oberfläche der Kunststoffteilchen stattfindet. Die Oberflächenbehandlung kann also sowohl chemisch als auch durch Wärme bzw. durch beide Behandlungsarten erreicht werden.

Nach einem weiteren vorteilhaften Merkmal der Erfindung wird dem Kunststoffgemenge eine organische Substanz, und zwar insbesondere Fettsäure, in einer Menge Von etwa 10 - 50 mg/kg Kunststoffgemenge zugegeben. Die Zugabe der Fettsäure dient der Konditionierung der Kunststoffteilchen, ebenfalls mit dem Ziel, bei der nachfolgenden triboelektrischen Aufladung eine höhere Ladungsdichte der einzelnen Teilchen zu erreichen. Auch diese Behandlung kann allein oder in Kombination mit der chemischen oder thermischen Behandlung der Kunststoffteilchen erfolgen.
Es hat sich gezeigt, daß bei derart vorbehandelten Kunststoffteilchen im Freifallscheider selbst nur Feldstärken von 2 - 3 KV/cm aufrechterhalten werden müssen.
Bei dem bekannten Verfahren hingegen arbeitet der Freifallscheider mit einer Feldstärke von 3 - 4 KV/cm, was die Gefahr von Sprühentladungen in sich barg. Durch Sprühentladungen kann es zu einer Entzündung des Kunststoffgemisches im Freifallscheider kommen.

Die triboelektrische Aufladung selbst erfolgt beispielsweise in einem Fließbetttrockner oder in einer Spiralschnecke ausreichender Länge oder auch dadurch, daß das Kunststoffgemenge pneumatisch über eine bestimmte Strecke befördert wird. Als Randbedingungen sind bei der triboelektrischen Aufladung Temperaturen von etwa 15 - 50°C, vorzugsweise von 20 - 35°C, und eine relative Feuchte der umgebenden Luft von 10 - 40 %, vorzugsweise 15 - 20 %, einzuhalten. Die triboelektrische Aufladung der Kunststoffteilchen selbst erfolgt bekannterweise durch innige Berührung der Teilchen miteinander.

Anhand der nachfolgenden Beispiele wird das erfindungsgemäße Verfahren erläutert:

### Beispiel 1: Trennung eines Getränkeflaschengemenges

Das eingesetzte Getränkeflaschengemisch wies folgende Zusammensetzung auf:
76,9 % PET
19,8 % PVC
2,1 % PE
1,2 % Papier/Schmutz
Das Flaschengemenge wurde einer naß arbeitenden Schneidmühle zugeführt und unter Wasserzugabe auf eine Teilchengröße von unter 6 mm zerkleinert. Die auch Papier enthaltende Schmutzlösung wurde abgezogen. Danach wurde das Gut in einem Wäscher kräftig gerührt und damit die Oberflächen gereinigt und auf die später erfolgende elektrostatische Trennung vorbereitet.

Zur Abtrennung der Polyolefine (PE) wurde die Substanz einem Hydrozyklon zugeführt. Das resultierende PVC-PET-Gemisch wurde auf einem Vibrationssieb von der Flüssigkeit getrennt, geschleudert und in einem Fließbetttrockner 6 min bei 70 - 100°C getrocknet.

Im Fließbett lassen sich eventuell noch vorhandene letzte Papierreste mit der Abluft austragen und mittels eines Zyklons aus der Abluft abtrennen. Das vorgetrocknete Gut wurde danach in einem weiteren fließbetttrockner noch 3 min bei 30°C kontaktiert und dabei aufgeladen.

Das aus dem Fließbett auslaufende Gut wurde kontinuierlich einer aus zwei Scheidern bestehenden Trennanlage zugeführt. In der Vortrennung wird bereits ein PET-Konzentrat mit 99,4 % PET erhalten; das PVC-Konzentrat mit einem PVC-Gehalt von 82,3 % wurde mittels einer Spiralschnecke zum Nachtrennscheider befördert, wobei sich erneut die selektive Aufladung der Kunststoffteilchen ausbildete.

Das so aufgeladene Vorkonzentrat wurde auf dem Nachtrennscheider in ein hochprozentiges PVC-Konzentrat, eine Mittelgutfraktion und eine ca. 53 % PET-enthaltende Abreicherungsfraktion aufgetrennt. Letztere wurde gemeinsam mit dem Mittelgut der Vortrennung zur Neuaufladung in das Fließbett rezykliert.

Alles in allem ließ sich das Kunststoffgemenge in
eine PVC-Fraktion mit einem Reinheitsgrad von 99,3 % PVC,
eine PET-Fraktion mit einen Reinheitsgrad von 99,4 % PET
und
eine PE-Fraktion mit einem Reinheitsgrad von 97,6 % PE
auftrennen; die Ausbeute (absolute Menge) - bezogen auf das eingesetzte Flaschengemenge - bestand aus:
94,6 % PET
96,2 % PVC
89,7 % PE.

### Beispiel 2

### Trennung eines PE/PP/PS/PVC-Kunststoffgemenges

Das eingesetzte Gemenge aus gebrauchten Kunststoffartikeln enthielt die vier gebräuchlichsten Massenkunststoffe in folgender Zusammensetzung:
45,7 % PE
20,1 % PP
17,5 % PVC
14,9 % PS
1,8 % Reststoffe
100 kg dieses Gemenges wurden zunächst auf einer Schneidmühle vollständig auf eine Korngröße unter 6 mm zerkleinert. Das Schnitzelgemenge wurde einem Wäscher zugeführt und mit frischem Wasser verrührt. Das gewaschene Gut wurde in ein mit Wasser gefülltes Flotationsbecken überführt, während die Schmutzlösung verworfen wurde. Die Polyolefine enthaltende Leichtfraktion wurde abgeschöpft, während die das PVC und PS enthaltende Schwerfraktion am Boden des Beckens abgesaugt wurde. Beide Fraktionen wurden mittels Schleudern vorentwässert.

Die PP/PE-Fraktion wurde einem Fließbetttrockner zugeführt und bei 80°C 6 min getrocknet. Auf das ausfließende Gut wurde ein Fettsäuregemisch C8-C12 in einer Menge von 50 g/t aufgesprüht und in einem weiteren Fließbetttrockner noch 3 min bei 30°C fluidisiert. Das aus dem Fließbett ausfließende Gemenge wurde kontinuierlich einem Freifallscheider zugeführt. Das Mittelgut dieser Trennung wurde kontinuierlich in den zweiten Fließbetttrockner zurückgeführt.

Die elektrostatische Trennung der Leichtfraktion lieferte folgendes Ergebnis:

| | Menge kg | Analyse (Reinheitsgrad in %) | Ausbeute (in % des Eingebrachten) |
|---|---|---|---|
| PE-Fraktion | 44,1 | 96,6 | 92,2 |
| PP-Fraktion | 20,6 | 88,5 | 90,7 |

Die Schwerfraktion wurde in einen Fließbetttrockner mit angeschlossenem Kühler überführt und in der Heizzone ca, 6 min bei 80°C getrocknet und in der Kühlzone noch ca. 3 min bei 30°C fluidisiert. Die elektrostatische Trennung, ebenfalls mit Mittelgutrückführung, lieferte folgendes Ergebnis:

| | Menge kg | Analyse (Reinheitsgrad in %) | Ausbeute (in % des Eingebrachten) |
|---|---|---|---|
| PVC-Fraktion | 17,3 | 97,1 | 95,9 |
| PS-Fraktion | 14,8 | 94,3 | 93,7 |

### Beispiel 3

### Trennung eines PE/PS/PET/PVC-Gemenges in die Einzelkomponenten

Das eingesetzte Gemenge aus gebrauchten Kunststoffen wies folgende Zusammensetzung auf:
46,8 % PE
29,8 % PS
12,2 % PVC
10,1 % PET
1,1 % Schmutz
100 kg dieses Gemenges wurden zunächst auf einer Schneidmühle vollständig auf eine Korngröße unter 6 mm zerkleinert. Das Schmitzelgememge wurde einem Wäscher zugeführt und mit frischem Wasser verrührt. Das gewaschene Gut wurde in ein mit Kaliablauge der Dichte 1,2 g/cm³ gefülltes Flotationsbecken gefüllt.

Die PE und PS enthaltende Leichtfraktion wurde abgeschöpft, während die das PVC und PET enthaltende Schwerfraktion am Boden des Beckens abgesaugt wurde. Beide Fraktionen wurden auf einem Schwingsieb vorentwässert und mit Frischwasser gewaschen und anschließend auf Schleudern bis auf eine anhaftende Feuchte von 2 % vorentwässert. Die bei der Dichtetrennung und der Vorentwässerung anfallenden salzhaltigen Abwässer können zur Aufarbeitung in den Kali-Lösebetrieb zurückgeführt werden.

Beide Fraktionen wurden separaten Fließbetttrocknern zugeführt, die jeweils mit einer Heiz- und Kühlzone ausgestattet waren. In der heißen Zone wurden die Güter auf 80°C erwärmt, wobei die Verweilzeit etwa 6 min betrug, während die nachgeschaltete Kühlzone mit nicht erwärmter Luft betrieben wurde:
Die aus den Fließbetten ausfließenden Güter wurden elektrostatischen Freifallscheidern zugeführt, wobei die anfallenden Mittelgüter in die Fließbetten zurückgeführt wurden.

Die elektrostatische Trennung der Leichtfraktion lieferte folgendes Ergebnis:

| | Menge kg | Analyse (Reinheitsgrad in %) | Ausbeute (in % des Eingebrachten) |
|---|---|---|---|
| PE-Fraktion | 43,8 | 95,6 | 93,5 |
| PS-Fraktion | 27,7 | 92,4 | 92,9 |

Bei der elektrostatischen Trennung der Schwerfraktion wurde nachstehendes Ergebnis erhalten:

| | Menge kg | Analyse (Reinheitsgrad in %) | Ausbeute (in % des Eingebrachten) |
|---|---|---|---|
| PVC-Fraktion | 12,6 | 93,9 | 96,6 |
| PET-Fraktion | 9,2 | 97,1 | 88,0 |

### Fließbett zum Beispiel 1:

### Trennung der Kunststoffe eines Gemisches von leeren Getränkeflaschen - 100 kg Trockensubstanz

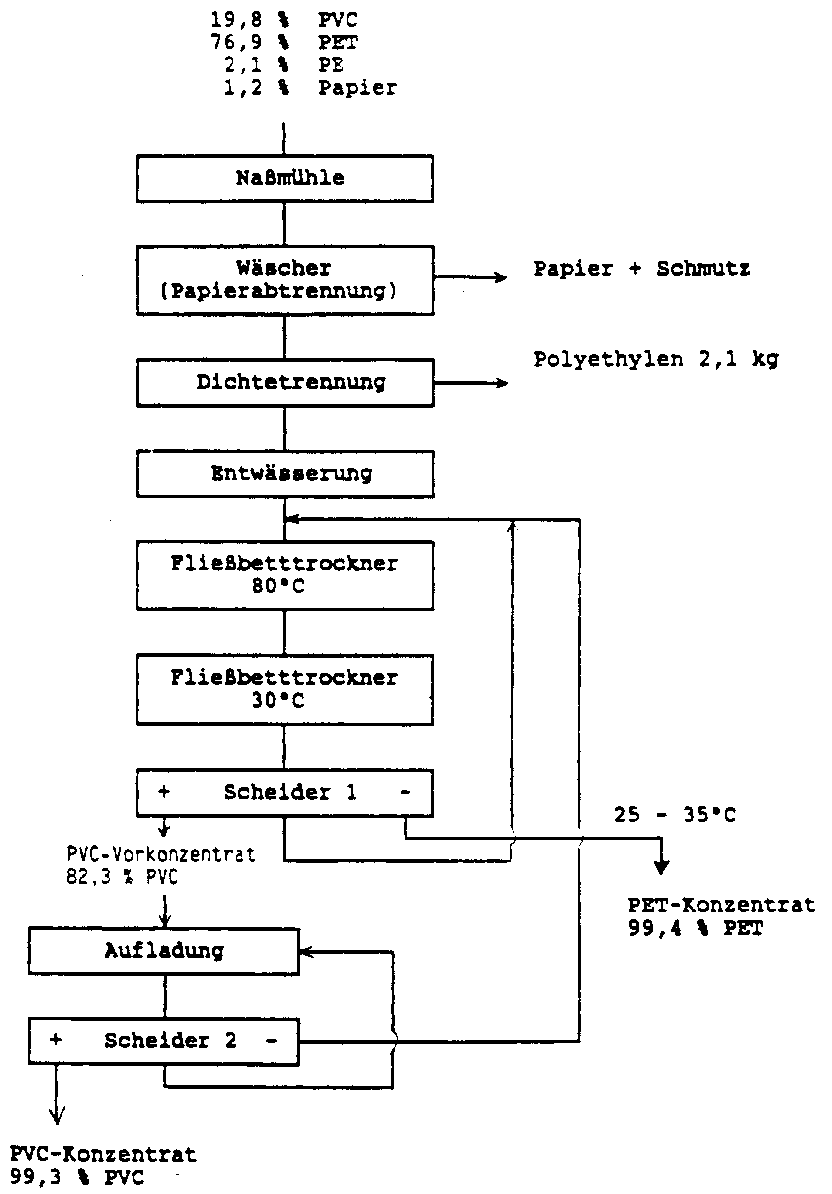

### Fließbild zu Beispiel 2:

### Trennung eines PE/PP/PVC/PS-Kunststoffgemisches in die Einzelkomponenten

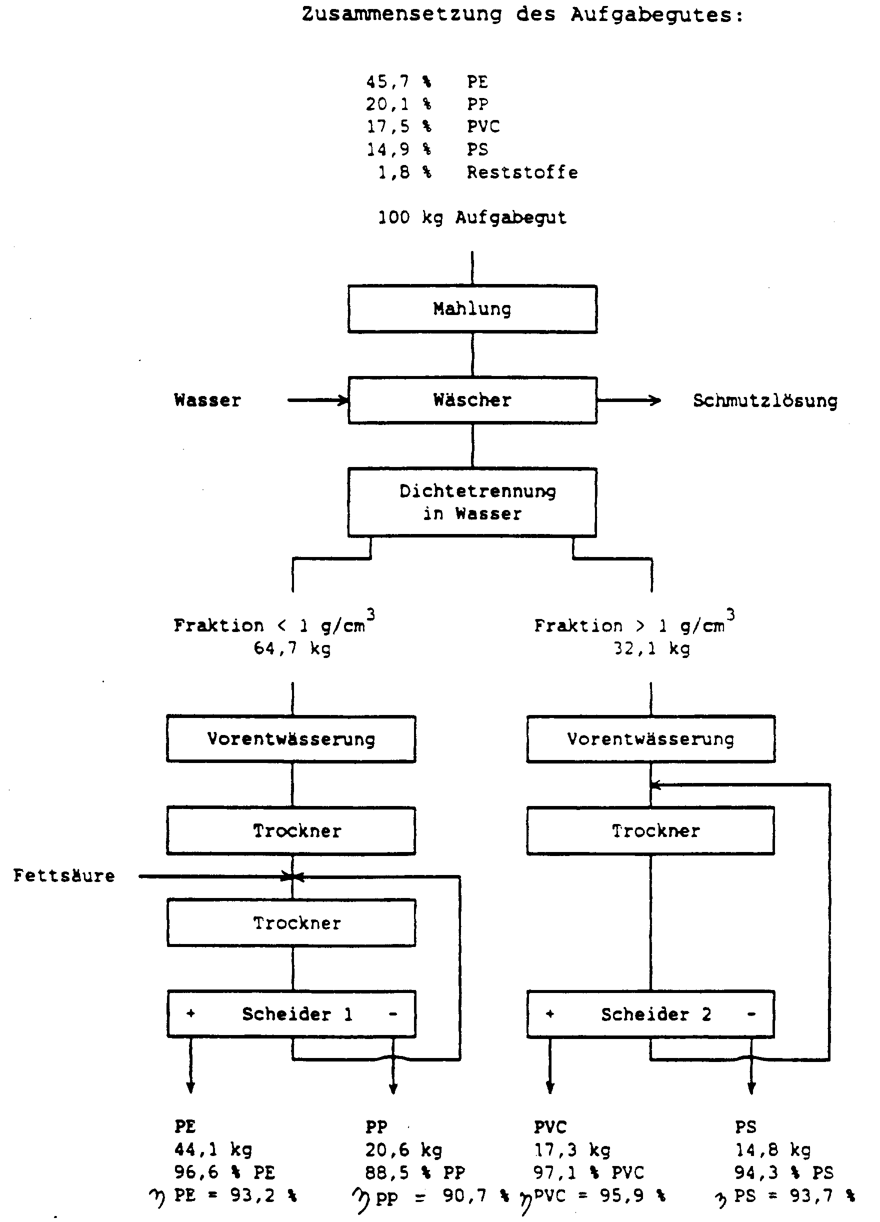

### Fließbild zu Beispiel 3:

### Trennung eines PE/PP/PVC/PET-Kunststoffgemisches in die Einzelkomponenten

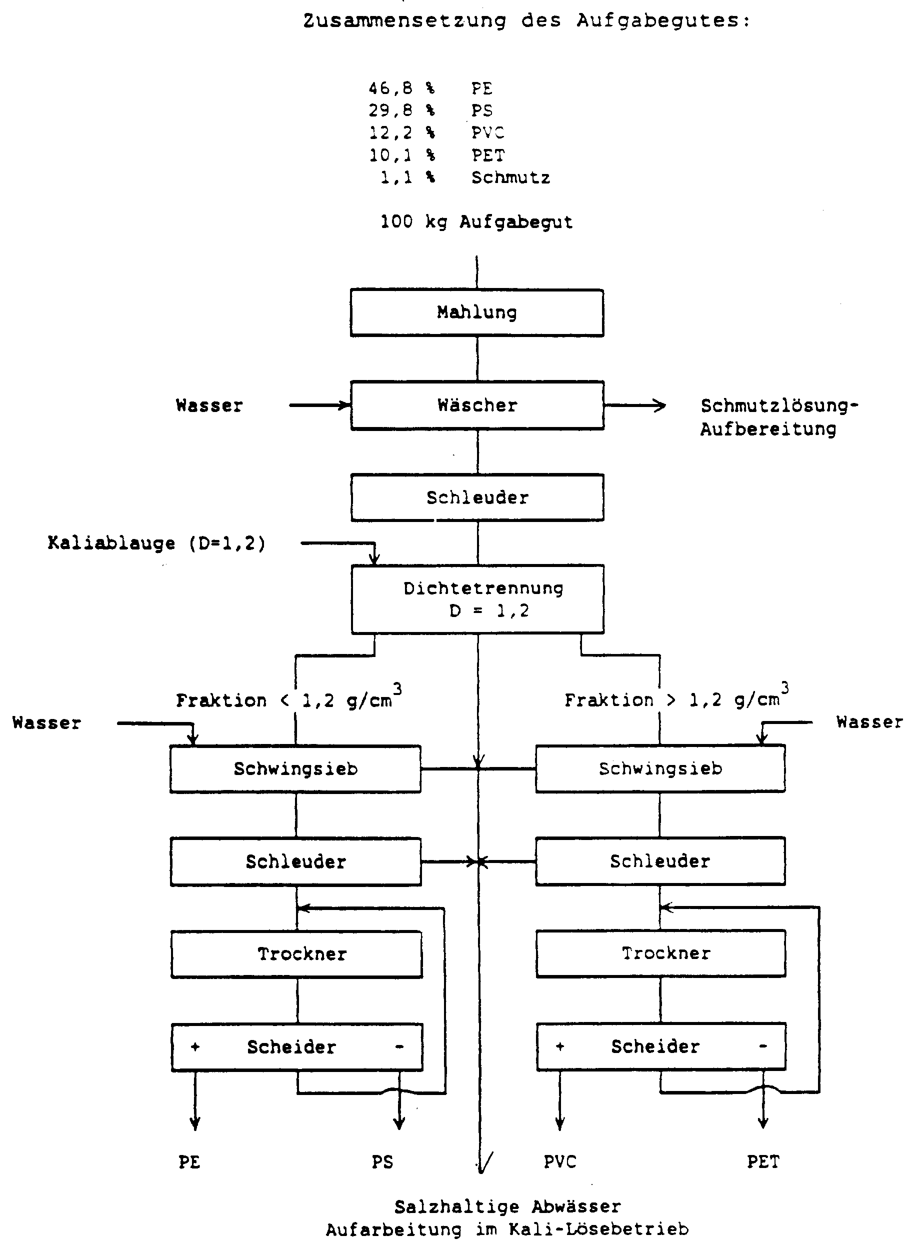

## Patentansprüche

1. Verfahren zur Trennung von zerkleinerten Kunststoffteilchen eines Kunststoffgemenges von Kunststoffen chemisch unterschiedlicher Art, die teilweise einen sich überschneidenden und teilweise einen unterschiedlichen Dichtebereich aufweisen, z.B. Polyethylen (PE), Polyethylenterephthalat (PET), Polypropylen (PP), Polystyrol (PS), Polyvinylchlorid (PVC), unter Anwendung der Dichtetrennung und Elektrostatik, dadurch gekennzeichnet, daß die Trennung in mindestens zwei Schritten erfolgt, wobei in einem ersten Schritt die Kunststoffteilchen, die einen unterschiedlichen Dichtebereich aufweisen, nach dem Prinzip der Dichtetrennung voneinander getrennt werden, und in einem zweiten Schritt die Kunststoffteilchen mit gleichem Dichtebereich oberflächenbehandelt, triboelektrisch aufgeladen und anschließend elektrostatisch in einem Freifallscheider getrennt werden.

2. Verfahren nach Anspruch 1, dadurch gekennzeichnet, daß die Dichte der Trennflüssigkeit so gewählt wird, daß sie in das Gebiet der größten Dichtedifferenz zwischen die einzelnen Kunststoffe fällt.

3. Verfahren nach Anspruch 2, dadurch gekennzeichnet, daß die Trennflüssigkeit so gewählt wird, daß sie entweder im basischen Bereich (pH-Wert etwa 11-12) oder im sauren Bereich (pH-Wert etwa 2-4) liegt.

4. Verfahren nach Anspruch 3, dadurch gekennzeichnet, daß die Trennflüssigkeit eine Salzlösung ist, deren Hauptbestandteil NaCl ist.

5. Verfahren nach Anspruch 4, dadurch gekennzeichnet, daß zusätzlich K-, Mg- und SO₄-Ionen vorhanden sind.

6. Verfahren nach Anspruch 1, dadurch gekennzeichnet, daß nach dem Schritt der Dichtetrennung die Trennflüssigkeit aus dem Kunststoffgemenge durch Wasser herausgewaschen wird,

7. Verfahren nach Anspruch 6, dadurch gekennzeichnet, daß nach dem Waschen das Kunststoffgemenge getrocknet wird, wobei vor dem Trocknen das Kunststoffgemenge durch ein Entwässerungsaggregat, z.B. eine Zentrifuge, auf einen Restwasseranteil von unter 2 % reduziert wird.

8. Verfahren nach Anspruch 7, dadurch gekennzeichnet, daß das vorentwässerte Kunststoffgemenge einer Wärmebehandlung bei 70 - 100°C über einen Zeitraum von mindestens 5 min unterzogen wird.

9. Verfahren nach Anspruch 6 oder 7 , dadurch gekennzeichnet, daß dem Kunststoffgemenge eine organische Substanz zugegeben wird.

10. Verfahren nach Anspruch 9 , dadurch gekennzeichnet, daß die organische Substanz eine Fettsäure ist.

11. Verfahren nach Anspruch 10, dadurch gekennzeichnet, daß die Fettsäure in einer Menge von 10 - 50 mg/kg Kunststoffgemenge zugegeben wird.

12. Verfahren nach Anspruch 2, dadurch gekennzeichnet, daß die Dichte der Trennflüssigkeit auf Werte zwischen 1,0 und 1,3 g/cm³ eingestellt wird.

13. Verfahren nach Anspruch 1, dadurch gekennzeichnet, daß die Kunststoffteilchen des Kunststoffgemenges eine Größe unter 10 mm, vorzugsweise unter 6 mm, aufweisen,

14. Verfahren nach Anspruch 1, dadurch gekennzeichnet, daß die triboelektrische Aufladung des Kunststoffgemenges bei einer Temperatur von 15 - 50°C, vorzugsweise von 20 - 35°C, und bei einer relativen Feuchte der umgebenen Luft von 10 - 40 %, vorzugsweise 15 - 20 %, erfolgt.

15. Verfahren nach Anspruch 1, dadurch gekennzeichnet, daß zur triboelektrischen Aufladung das Kunststoffgemenge in einen Fließbetttrockner eingebracht wird.

16. Verfahren nach Anspruch 1, dadurch gekennzeichnet, daß das Kunststoffgemenge durch eine Spiralschnecke ausreichender Länge geschickt wird,

17. Verfahren nach Anspruch 1, dadurch gekennzeichnet, daß das Kunststoffgemenge pneumatisch über eine bestimmte Strecke befördert wird.

18. Verfahren nach Anspruch 1, dadurch gekennzeichnet, daß der Freifallscheider bei einer Feldstärke von 2 - 3 KV/cm arbeitet.

## Claims

1. A method of separating fragmented plastics particles of a mixture of plastics of chemically different kinds which have in part an overlapping density range and in part a different density range, for example polyethylene (PE), Polyethylene terephthalate (PET), polypropylene (PP), polystyrene (PS) and polyvinyl chloride (PVC), using density separation and electrostatics, characterised in that the separation operation is effected in at least two steps, wherein in a first step the plastics particles which have a different density range are separated from each other on the basis of the principle of density separation and in a second step the plastics particles with the sane density range are subjected to surface treatment, triboelectrically charged up and then separated electrostatically in a free-fall separator.

2. A method according to claim 1 characterised in that the density of the separating liquid is so selected that it falls into the area of the largest density difference between the individual plastics.

3. A method according to claim 2 characterised in that the separating liquid is so selected that it is either in the basic range (pH-value of about 11-12) or in the acid range (pH-value about 2-4).

4. A method according to claim 3 characterised in that the separating liquid is a salt solution whose main constituent is NaCl.

5. A method according to claim 4 characterised in that K, Mg and SO₄ ions are additionally present.

6. A method according to claim 1 characterised in that after the density separation step the separating liquid is washed out of the mixture of plastics by water.

7. A method according to claim 6 characterized in that after the washing operation the mixture of plastics is dried, wherein prior to the drying operation the mixture of plastics is reduced to a proportion of residual water of below 2% by a water-removal unit, for example a centrifuge.

8. A method according to claim 7 characterized in that the mixture of plastics which has been subjected to a preliminary operation for the removal of water is subjected to a heat treatment at 70 - 100°C over a period of at least 5 minutes.

9. A method according to claim 6 or claim 7 characterized in that an organic substance is added to the mixture of plastics.

10. A method according to claim 9 characterized in that the organic substance is a fatty acid.

11. A method according to claim 10 characterised in that the fatty acid is added in an amount of 10 - 50 mg/kg of the mixture of plastics.

12. A method according to claim 2 characterised in that the density of the separating liquid is adjusted to values between 1.0 and 1.3 g/cm³.

13. A method according to claim 1 characterized in that the plastics particles of the mixture of plastics are of a size of below 10 mm, preferably below 6 mm.

14. A method according to claim 1 characterised in that the operation of triboelectrically charging the mixture of plastics is effected at a temperature of 15 - 50°C, preferably 20 - 35°C and at a relative humidity of the ambient air of 10 - 40%, preferably 15 - 20%.

15. A method according to claim 1 characterized in that the mixture of plastics is introduced into a fluidised bed drier for the triboelectric charging operation.

16. A method according to claim 1 characterized in that the mixture of plastics is passed through a spiral screw of adequate length.

17. A method according to claim 1 characterized in that the mixture of plastics is pneumatically conveyed over a certain distance.

18. A method according to claim 1 characterized in that the free-fall separator operates with a field strength of 2 - 3 KV/cm.

## Revendications

1. Procédé de séparation de particules de matières plastiques fragmentées d'un mélange de matières plastiques de natures chimiques différentes, qui présentent un intervalle de masse volumique se recouvrant en partie et en partie différent, par exemple de polyéthylène (PE), de poly(téréphtalate d'éthylène) (PET), de polypropylène (PP), de polystyrène (PS), de poly(chlorure de vinyle) (PVC), en utilisant la séparation en fonction de la masse volumique et électrostatique, caractérisé en ce qu'il consiste à effectuer la séparation en au moins deux stades, les particules de matières plastiques qui ont un intervalle de masse volumique différent étant séparées les unes des autres dans un premier stade suivant le principe de la séparation en fonction de la masse volumique et les particules de matières plastiques ayant le même intervalle de masse volumique étant, dans un second stade, traitées superficiellement, chargées triboélectriquement et ensuite séparées électrostatiquement dans un séparateur à chute libre.

2. Procédé suivant la revendication 1, caractérisé en ce qu'il consiste à choisir la masse volumique du liquide de séparation de manière à ce qu'il se trouve dans le domaine de la plus grande différence de masse volumique entre les matières plastiques.

3. Procédé suivant la revendication 2, caractérisé en ce qu'il consiste à choisir le liquide de séparation de manière à ce qu'il se trouve dans le domaine basique (pH de 11 à 12 environ) ou dans le domaine acide (pH de 2 à 4 environ).

4. Procédé suivant la revendication 3, caractérisé en ce que le liquide de séparation est une solution de sel dont le constituant principal est NaCl.

5. Procédé suivant la revendication 4, caractérisé en ce qu'il est présent en outre des ions K, Mg et SO₄.

6. Procédé suivant la revendication 1, caractérisé en ce qu'il consiste, après le stade de séparation suivant la masse volumique, à enlever le liquide de séparation du mélange de matières plastiques par lavage à l'eau.

7. Procédé suivant la revendication 6, caractérisé en ce qu'il consiste après le lavage à sécher le mélange de matières plastiques, le mélange de matières plastiques étant, avant le séchage, réduit dans une installation de déshydratation, par exemple dans une centrifugeuse, à une proportion résiduelle d'eau inférieure à 2 %.

8. Procédé suivant la revendication 7, caractérisé en ce qu'il consiste à soumettre le mélange de matières plastiques prédéshydraté à un traitement thermique entre 70 et 100°C pendant une durée d'au moins 5 minutes.

9. Procédé suivant la revendication 6 ou 7, caractérisé en ce qu'il consiste à ajouter au mélange de matières plastiques une substance organique.

10. Procédé suivant la revendication 9, caractérisé en ce que la substance organique est un acide gras.

11. Procédé suivant la revendication 10, caractérisé en ce qu'il consiste à ajouter un acide gras en une quantité de 10 à 50 mg/kg du mélange de matières plastiques.

12. Procédé suivant la revendication 2, caractérisé en ce qu'il consiste à régler la masse volumique du liquide de séparation à des valeurs comprises entre 1,0 et 1,3 g/cm³.

13. Procédé suivant la revendication 1, caractérisé en ce que les particules du mélange de matières plastiques ont une dimension inférieure à 10 mm et de préférence inférieure à 6 mm.

14. Procédé suivant la revendication 1, caractérisé en ce qu'il consiste à effectuer la charge triboélectrique du mélange de matières plastiquez à une température de 15 à 50°C, de préférence de 20 à 35°C, et à une humidité relative de l'air ambiant de 10 à 40 %, de préférence de 15 à 20 %.

15. Procédé suivant la revendication 1, caractérisé en ce qu'il consiste à introduire, pour le chargement triboélectrique, le mélange de matières plastiques dans un séchoir à lit fluidisé.

16. Procédé suivant la revendication 1, caractérisé en ce qu'il consiste à charger le mélange de matières plastiques dans une vis hélicoïdale de longueur suffisante.

17. Procédé suivant la revendication 1, caractérisé en ce qu'il consiste à transporter le mélange de matières plastiques pneumatiques sur une certaine distance.

18. Procédé suivant la revendication 1, caractérisé en ce que le séparateur à chute libre fonctionne avec une intensité du champ de 2 à 3 KV/cm.
